# EUROPÄISCHE PATENTSCHRIFT

(11) **EP 2 414 411 B1**
(45) Veröffentlichungstag und Bekanntmachung des Hinweises auf die Patenterteilung: **20.02.2013**
(21) Anmeldenummer: 10710581.9
(22) Anmeldetag: 23.03.2010
(51) Int. Cl.: C08F 216/08, B01D 71/38

(54) **MEMBRANEN AUF BASIS VON POLYVINYLALKOHOL**
MEMBRANES BASED ON POLYVINYL ALCOHOL
MEMBRANES À BASE D'ALCOOL POLYVINYLIQUE

(30) Priorität: 02.04.2009 DE 102009002130
(43) Veröffentlichungstag der Anmeldung: 08.02.2012
(73) Patentinhaber: Wacker Chemie AG, 81737 München (DE)
(72) Erfinder: HÖLZL, Manfred, 84489 Burghausen (DE); BORTENSCHLAGER, Martin, 85232 Bergkirchen (DE); HECHER, Susanne, 82515 Wolfratshausen (DE); SCHAUER, Felicitas, 85653 Aying (DE)
(74) Vertreter: Schuderer, Michael
(86) Internationale Anmeldenummer: PCT/EP2010/053756
(87) Internationale Veröffentlichungsnummer: WO 2010/112372

(56) Entgegenhaltungen:
- WO-A1-2004/065437
- WO-A1-2005/021604
- JP-A- 3 030 820

## Beschreibung

Die Erfindung betrifft die Verwendung von Polyvinylalkoholen zur Herstellung von Membranen, Verfahren zur Herstellung von Membranen sowie die damit erhältlichen Membranen und deren Verwendung für die Trennung von Gemischen.

Membranen sind poröse Feststoffe und finden Anwendung zur Trennung von Gemischen. Ein Vorteil von Membran-Trennverfahren ist, dass sie auch bei niedrigen Temperaturen, wie beispielsweise bei Raumtemperatur, durchgeführt werden können und somit im Vergleich zu thermischen Trennverfahren, wie Destillation, Sublimation oder Kristallisation, energetisch weniger aufwändig sind und das zu trennende Gemisch thermisch weniger belastet wird. Weiterhin können mit Hilfe von Membranen Trennungen erreicht werden, die mit thermischen Verfahren nicht möglich sind, weil beispielsweise das Vorliegen von Azeotropen eine destillative Trennung oder von isomorphen Kristallformen eine Trennung durch Umkristallisation ausschließen. Probleme bereiten allerdings Limitierungen hinsichtlich der Lebensdauer, der Trennleistung, der Durchflussraten wie auch der mechanischen Eigenschaften der Membranen sowie die mit ihrer Herstellung verbundenen Kosten.

Membranen auf Basis von Polyvinylalkoholen (PVA) bzw. Polyvinylacetaten (PVAc) sind bereits seit längerem bekannt. So werden PVA-Membranen für die Mikro- und Ultrafiltration eingesetzt (Chuang, Polymer, 2000, Volume 41, Seiten 5633 bis 5641). Die JP-A 3030820 beschreibt die Herstellung von syndiotaktischen Polyvinylalkoholen ausgehend von Vinylacetat und gegebenenfalls weiteren Monomeren wie Vinyloxytrimethylsilan und den Einsatz derartiger Polyvinylalkohole zur Herstellung von Membranen. Die EP-A 423949 empfiehlt den Einsatz von Membranen auf Basis von PVA für die Trennung von azeotropen Wasser/Ethanol-Gemischen. Eine derartige Trennung wird auch als Pervaporation bezeichnet. PVA ist auf Grund seines hydrophilen Polymergerüstes als Membranmaterial für die Trennung von Wasser-Gemischen besonders geeignet. So kann aus Wasser/Ethanol-Gemischen durch Einsatz von Membran-Trennverfahren 99 Gew.-%iger Ethanol erhalten werden. Weiterhin zeichnet sich PVA durch eine geringe Proteinadsorptionstendenz aus, womit das sogenannte membrane fouling, d.h. die Ablagerung von organischen Verunreinigungen auf der Membran, verringert werden kann.

Die trennselektive PVA-Schicht kann sich auf einer porösen Trägerstruktur befinden oder PVA kann selber zu einer porösen Membran verarbeitet sein, beispielsweise mittels Phaseninversionsprozessen. So werden in der EP-A 96339 PVA-Membranen beschrieben, die auf poröse Polyacrylnitril-Trägerstrukturen aufgebracht werden. In der GB-A 1325227 werden poröse PVA-Membranen beschrieben, die nach dem Phaseninversionsprozesses hergestellt wurden.

Im Zuge der Herstellung der PVA-Membranen wird der hierfür eingesetzte Polyvinylalkohol im Allgemeinen vernetzt. Dies kann beispielsweise durch Acetalisierung mittels Dialdehyden, wie Glutaraldehyd, erfolgen. So erhältliche Membranen besitzen allerdings nur eine sehr eingeschränkte Stabilität, da entsprechende Acetale unter sauren wie basischen Bedingungen hydrolisiert werden können, wodurch die Anwendungsbreite entsprechender Membranen hinsichtlich der pH-Werte der zu trennenden Lösungen erheblich eingeschränkt wird. Alternativ kann die Vernetzung von Polyvinylalkohol mit Diisocyanaten oder Anhydriden, z.B. Maleinsäureanhydrid, erfolgen. Aber auch diese Vorgehensweise führt zu Membranen mit unzureichender Stabilität. Nachteilig ist auch, dass die vorgenannten Reagenzien zur Vernetzung giftig sind und großtechnisch nur mit aufwändigen Schutzmaßnahmen gehandhabt werden können. Darüberhinaus quellen die so erhältlichen PVA-Membrane bei Temperaturen über 70°C bzw. in Lösungen mit hohen Wassergehalten stark, wodurch die Stabilität, die Wasser-Flussrate und die Selektivität der PVA-Membranen beeinträchtigt werden.

Aber gerade bei Einsatz von Membranen für die Trennung von Gemischen mit hohen Wassergehalten lassen sich durch Anwendung von Temperaturen von über 70°C die Raum-Zeitausbeuten und die Prozesseffizienz steigern. Um dies zu ermöglichen, wird beispielsweise die Herstellung von PVA-Membranen durch Vernetzung von PVA mit Tetraethylorthosilikat empfohlen (Karin Kul, Applied Polymer Science, 2004, Volume 94, Seiten 1304 bis 1315). Allerdings sind auch so erhältliche PVA-Membrane noch nicht hinreichend stabil gegenüber Hydrolyse. Zudem gestaltet sich die Herstellung der Membranen sehr aufwändig, da sich die einzelnen Edukte zur Herstellung der PVA-Membrane meist nicht mischen lassen, so dass eine Phasenseparation von PVA und des Silikats auftritt und schließlich Membrane mit inhomogener Zusammensetzung erhalten werden, die hinsichtlich ihres Quellverhaltens und ihrer Stabilität nicht befriedigend sind.

Es bestand daher die Aufgabe Membranen bereitzustellen, die die bekannten vorteilhaften Eigenschaften von Membranen auf Basis von Polyvinylalkohol aufweisen, nicht aber die vorgenannten Nachteile.

Überraschenderweise wurde diese Aufgabe mit Membranen auf Basis von Silan-modifizierten Polyvinylalkoholen gelöst, deren Herstellung ausgehend von einem oder mehreren Vinylestern und zusätzlich einer oder mehreren ethylenisch ungesättigten Silan-Verbindungen erfolgte, die mindestens eine Alkoxy-, Alkylcarboxy- oder Arylcarboxy-Gruppe tragen.

Gegenstand der Erfindung ist die Verwendung von Silan-modifizierten Polyvinylalkoholen zur Herstellung von Membranen, dadurch gekennzeichnet, dass die Silan-modifizierten Polyvinylalkohole erhältlich sind durch
a) radikalisch initiierte Copolymerisation von einem oder mehreren Vinylestern von unverzweigten oder verzweigten Carbonsäuren mit 1 bis 15 C-Atomen und einer oder mehreren ethylenisch ungesättigten Silan-Verbindungen ausgewählt aus der Gruppe umfassend Verbindungen der allgemeinen Formeln

   CR₂=CR-B-Si(OR')₃₋ₙ(R'')ₙ (1),

   oder

   CR₂=CRC(=O)-D-B-Si(OR')₃₋ₙ(R'')ₙ (2),

   wobei
   B für einen Aryl-, Heteroaryl- oder (CR₂)ₘ-Rest, in dem gegebenenfalls ein oder mehrere nicht benachbarte CR₂-Gruppen durch Heteroatome ersetzt sein können,
   D für ein Heteroatom,
   R für ein Wasserstoffatom, einen Alkyl- oder Aryl-Rest oder ein Heteroatom, das gegebenenfalls mit einem Wasserstoffatom oder einem Alkyl-, Aryl-Rest substituiert ist,
   OR' für einen Alkoxy-, Alkylcarboxy- oder Arylcarboxy-Rest, R" für einen Alkyl- oder Aryl-Rest stehen und
   n 0, 1 oder 2 und
   m 0 bis 15 bedeuten, und
b) anschließende Verseifung der in Schritt a) erhaltenen Silan-modifizierten Vinylester-Copolymerisate.

Wesentlich für die vorliegende Erfindung ist, dass zur Herstellung der Silan-modifizierten Polyvinylalkohole mindestens eine ethylenisch ungesättigte Silan-Verbindung mit mindestens einer OR'-Gruppe eingesetzt wird und die Siliziumatome der Silan-Einheiten vorzugsweise über Kohlenstoff-Kohlenstoff-Bindungen an die Polymerkette der Silan-modifizierten Polyvinylalkohole gebunden sind.

Beispiele für geeignete Vinylester sind Vinylacetat, Vinylpropionat, Vinyl-2-ethylhexanoat, Vinyllaurat, 1-Methylvinylacetat, Vinylpivalat und Vinylester von alpha-verzweigten Monocarbonsäuren mit 5 bis 15 C-Atomen, wie z.B. VeoVa9® und VeoVa10® (Firma Resolutions). Besonders bevorzugt ist Vinylacetat.

Zur Herstellung der Silan-modifizierten Vinylester-Copolymerisate in Schritt a) werden vorzugsweise 50 bis 90 Mol-%, besonders bevorzugt 60 bis 99 Mol-% und am meisten bevorzugt 80 bis 90 Mol-% Vinylester eingesetzt, bezogen auf die Gesamtmenge an Monomeren in Schritt a).

In den ethylenisch ungesättigten Silan-Verbindungen sind bevorzugte Reste R Wasserstoff oder Alkylreste mit 1 bis 12 C-Atomen, insbesondere Wasserstoff oder Methyl-Reste. Bevorzugte Reste OR' sind Methoxy-, Ethoxy-, Propoxy-, Butyloxy- oder Acetoxy-Reste. Bevorzugte Reste R" sind Alkyl- oder Arylreste mit 1 bis 12 C-Atomen, insbesondere Methyl-, Ethyl-, Propyl- oder Phenyl-Reste.

Beispiele für geeignete Aryl- oder Heteroaryl-Reste sind Phenyl- oder Imidazolreste. Beispiele für Heteroatome sind Sauerstoff, Schwefel oder N-R-Gruppen, wobei der Rest R die vorgenannten Bedeutungen annehmen kann.

Bevorzugte Werte für n sind 0 oder 1, der besonders bevorzugte Wert für n beträgt 0. Bevorzugte Werte für m sind 0 bis 3, der besonders bevorzugte Wert für m beträgt 0.

Beispiele für geeignete Silane sind Vinyltrimethoxysilan, Vinyldimethoxymethylsilan, Vinyldimethylmethoxysilan, Vinyltriethoxysilan, Vinyldiethoxymethylsilan, Vinyldimethylethoxysilan, Vinyltriisopropoxysilan, Vinyldiisopropoxymethylsilan, Vinyldimethylisopropoxysilan, Vinyltributoxysilan, Vinyldibutoxymethylsilan, Vinyldimethylbutoxysilan, Vinyltriacetoxysilan, gamma-Acryl- bzw. gamma-Methacryloxyisopropyltrialkoxysilan, gamma-Methacryloxymethyldi(alkoxy)methylsilan, gamma-Methacryloxydimethyl(alkoxy)silan, alpha-Methacryloxymethyltri(alkoxy)silan, alpha-Methacryloxymethyldi(alkoxy)methylsilan, alpha-Methacryloxydimethyl(alkoxy)silan.

Bevorzugt sind Silan-Verbindungen der Formel (1). Besonders bevorzugte Silan-Verbindungen sind Vinyltrimethoxysilan, Vinyltriethoxysilan, Vinyltriisopropoxysilan und Vinyltributoxysilan.

Vorzugsweise werden 0,1 bis 30 Mol.-%, besonders bevorzugt 5 bis 20 Mol.-% und am meisten bevorzugt 10 bis 20 Mol.-% Silan-Verbindungen eingesetzt, bezogen auf die Gesamtmenge an Monomeren in Schritt a).

In Schritt a) können als weitere Monomere zusätzlich ein oder mehrere Monomere aus der Gruppe umfassend Methacrylsäureester und Acrylsäureester von Alkoholen mit 1 bis 15 C-Atomen, Olefine, Diene, Vinylaromaten und Vinylhalogenide eingesetzt werden.

Beispiele für geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethycrylat, Propylacrylat, Propylmethacrylat, n-, iso-, t-Butylacrylat, n-, iso-, t-Butylmethacrylat, 2-Ethylhexylacrylat sowie Norbornylacrylat. Besonders bevorzugt sind Methylacrylat, Methylmethacrylat, n-, iso, t-Butylacrylat, 2-Ethylhexylacrylat und Norbornylacrylat. Beispiele für geeignete Diene sind 1,3-Butadien und Isopren. Beispiele für geeignete Olefine sind Ethen und Propen. Beispiele für geeignete Vinylaromaten sind Styrol und Vinyltoluol. Beispiele für geeignete Vinylhalogenide sind Vinylchlorid, Vinylidenchlorid oder Vinylfluorid, bevorzugt ist Vinylchlorid.

Der Anteil der weiteren Monomere beträgt vorzugsweise 0 bis 20 Mol-%, bezogen auf die Gesamtmenge an Monomeren in Schritt a).

Gegebenenfalls können noch Hilfsmonomere in einem Anteil von vorzugsweise 0,01 bis 20 Mol.-%, bezogen auf die Gesamtmenge an Monomeren in Schritt a), enthalten sein. Beispiele sind ethylenisch ungesättigte Mono- und Dicarbonsäuren. Bevorzugt sind Crotonsäure, Acrylsäure, Methacrylsäure, Fumarsäure und Maleinsäure. Weitere Beispiele sind ethylenisch ungesättigte Carbonsäureamide und -nitrile, vorzugsweise N-Vinylformamid, Acrylamid und Acrylnitril. Weiterhin bevorzugt sind auch cyclische Amide, wie z.B. N-Vinylpyrrolidon, Mono- und Diester der Fumarsäure und Maleinsäure wie z.B. Diethyl-, Diisopropylester und Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Monomere schließen ebenfalls auch kationische Monomere, wie z.B. Diallylammoniumchlorid (DADMAC), 3-Trimethylammoniumpropyl(meth)acrylamidchlorid (MAPTAC) und 2-Trimethylammoniumethyl(meth)acrylatchlorid. Weitere geeignete Hilfsmonomere schließen Vinylether, Vinylketone, weiter vinylaromatische Verbindungen mit gegebenenfalls enthaltenen Heteroatomen. Weiter ebenfalls bevorzugte Hilfsmonomere sind funktionalisierte (Meth)acrylate, insbesondere epoxifunktionelle wie z.B. Glycidylacrylate, Glycidylmethacrylate, Allylglycidether, Vinylglycidether oder Hydroxyalkyl-funktionelle wie Hydroxyethyl(meth)acrylat oder substituierte oder unsubstituierte Aminoalkyl(meth)acrylate. Ebenfalls bevorzugt sind nachvernetzende Comonomere wie z.B. Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie z.B. Isobutoxyether oder Ester des N-Methylolacrylamids, sowie des N-Methylolmethyacrylamids und des N-Methylolallylcarbamats. Weitere geeignete Hilfsmonomere sind mehrfach ethylenisch ungesättigte Monomere, beispielsweise Divinyladipat, Diallylmaleat, Allylmethacrylat, Butandioldiacrylat und Triallylcyanurat.

Die Silan-modifizierten Vinylester-Copolymerisate sind nach gängigen Polymerisationsverfahren zugänglich, wie beispielsweise in der DE-A 10140131 oder der DE-A 102004026609 beschrieben. Bevorzugt findet die Polymerisation in Substanz, in Suspension, in Emulsion oder besonders bevorzugt in Lösungsmitteln statt. Für die Lösungsmittelpolymerisation bevorzugte organische Lösungsmittel sind Ester, wie Essigsäuremethylester und Essigsäureethylester, oder besonders bevorzugt Alkohole, wie Methanol, Ethanol, n- bzw. iso-Propanol, n- bzw. t-Butanol.

Die Verseifung in Schritt b), auch unter dem Begriff Hydrolyse bekannt, erfolgt in an sich bekannter Weise z.B. nach dem Band - oder Kneterverfahren, im alkalischen oder sauren durch Zugabe von Säure oder Base. Bevorzugt findet die Verseifung im basischen statt, z.B. durch Zugabe von Alkali- oder Erdalkali-Hydroxiden oder Alkoholaten, wie Natriumhydroxid, Kaliumhydroxid, Natriummethanolat oder Lithiummethanolat. Besonders bevorzugt ist die Verseifung mit Lithiummethanolat oder Natriumhydroxid. Vorzugsweise wird die Verseifung in einem Lösungsmittel durchgeführt, insbesondere in Wasser, in einem oder mehreren Alkoholen oder einem Gemisch aus Wasser und einem oder mehreren Alkoholen. Üblicherweise wird die Base in einer Menge von 1 bis 10 Mol-% bezogen auf die Ester-Einheiten des Silan-modifizierten Vinylester-Copolymerisats eingesetzt. Die Verseifung erfolgt bevorzugt bei Temperaturen zwischen 20 und 90°C. Nach der Hydrolyse kann das Lösungsmittel abdestilliert werden und der Silan-modifierte Polyvinylalkohol in Form eines Pulvers erhalten werden. Weiterhin kann aber auch der Silan-modifierte Polyvinylalkohol entweder in dem oder den Lösungsmitteln der Verseifung weiterverarbeitet werden. Es kann aber auch ein Lösungsmittelaustausch erfolgen, indem sukzessive ein zweites Lösungsmittel, bevorzugt Wasser, zugegeben wird, während das erste Lösungsmittel abdestilliert wird, wobei Lösungen des Silan-modifizierten Polyvinylalkohols im zweiten Lösungsmittel, oder in Mischungen daraus, erhalten werden.

Als vollverseifte Silan-modifierte Vinylester-Copolymerisate bezeichnet man dabei solche Polymerisate, deren Hydrolysegrad mehr als 96 Mol-% beträgt. Der Hydrolysegrad gibt dabei den Anteil der Vinylester-Einheiten der Silan-modifizierten Vinylester-Copolymerisate an, die im Zuge der Verseifung in Vinylalkohol-Einheiten überführt wurden. Als teilverseifte Silan-modifierte Vinylester-Copolymerisate sind solche zu verstehen, die einen Hydrolysegrad von mehr als 20 Mol-% und weniger als 96 Mol-% haben. Die teil- oder vollverseiften Silan-modifizierten Vinylester-Copolymerisate haben vorzugsweise einen Hydrolysegrad von 50 Mol-% bis 99,99 Mol-%, besonders bevorzugt von 70 bis 99,99 Mol-%, am meisten bevorzugt von 90 bis 99,99 Mol-%.

In Schritt b) werden vorzugsweise ≤ 90%, besonders bevorzugt ≤ 80%, ganz besonders bevorzugt ≤ 70% und am meisten bevorzugt ≤ 50% der hydrolisierbaren Siliziumbindungen der Silan-Einheiten der Silan-modifizierten Vinylester-Copolymerisate hydrolisiert, bezogen auf die Gesamtzahl der hydrolysierbaren Siliziumbindungen der Silan-Verbindungen. Hydrolisierbare Siliziumbindungen sind erfindungsgemäß Si-OR'-Bindungen, durch deren Hydrolyse Si-OH Bindungen gebildet werden.

Die Viskosität der Silan-modifizierten Polyvinylalkohole (DIN 53015, Methode nach Höppler, 4 Gew.-%ig in Wasser, 20°C) beträgt zwischen 1 mPa bis 1200 mPa, bevorzugt zwischen 1 mPa bis 100 mPa, besonders bevorzugt zwischen 1 mPa bis 40 mPa. Der Polymerisationsgrad beträgt bevorzugt mindestens 35, bevorzugt mindestens 100, besonders bevorzugt mindestens 150.

Zur Herstellung der erfindungsgemäßen Membranen werden die Silan-modifizierten Polyvinylalkohole vorzugsweise in Form von Lösungen in einem oder mehreren organischen und/oder in einem oder mehreren anorganischen Lösungsmitteln eingesetzt.

Bevorzugte organische Lösungsmittel sind hierfür Kohlenwasserstoffe, halogenierte Kohlenwasserstoffe, Ether, Alkohole, Ketone, Säuren, Ester, Stickstoff-haltige Lösungsmittel und Schwefel-haltige Lösungsmittel.

Beispiele für geeignete Kohlenwasserstoffe sind Pentan, Hexan, Dimethylbutan, Heptan, 1-Hexen, 1,5-Hexadien, Cyclohexan, Terpentin, Benzol, Isopropylbenzol, Xylol, Toluol, Naphthalin, sowie Terahydronaphthalin. Beispiele für geeignete halogenierte Kohlenwasserstoffe sind Fluoroform, Perfluorheptan, Methylenchlorid, Chloroform, Tetrachlorkohlenstoff, 1,2-Dichlorethan, 1,1,1-Trichlorethan, Pentylchlorid, Bromoform, 1,2-Dibromethan, Methyleniodid, Fluorbenzol, Chlorbenzol sowie 1,2-Dichlorbenzol. Beispiele für geeignete Ether sind Diethylether, Butylethylether, Anisol, Diphenylether, Ethylenoxid, Tetrahydrofuran, Furan sowie 1,4-Dioxan. Beispiele für geeignete Alkohole sind Methanol, Ethanol, iso-Propanol, Butanol, Octanol, Cyclohexanol, Benzylalkohol, Ethylenglykol, Ethylenglycolmonomethylether, Propylenglycol, Butylglycol, Glycerol, Phenol sowie m-Kresol. Beispiele für geeignete Ketone sind Aceton, Diisobutylketon, Butan-2-on, Cyclohexanon sowie Acetophenon. Beispiele für geeignete Säuren sind Ameisensäure und Essigsäure. Beispiele für geeignete Ester sind Essigsäuremethylester, Essigsäureethylester, Essigsäurebutylester, Essigsäurephenylester, Glyceroltriacetat, Oxalsäurediethylester, Dioctylsebacat, Benzoesäuremethylester, Phthalsäuredibutylester sowie Phosphorsäuretrikresylester. Beispiele für geeignete Stickstoff-haltige Lösungsmittel sind Nitromethan, Nitrobenzol, Butyronitril, Acetonitril, Benzonitril, Malononitril, Hexylamin, Aminoethanol, N,N-Diethylaminoethanol, Anilin, Pyridin, N,N-Dimethylanilin, N,N-Dimethylformamid, N-Methylpiperazin sowie 3-Hydroxypropionitril. Beispiele für geeignete Schwefel-haltige Lösungsmittel sind Schwefelkohlenstoff, Methanthiol, Dimethylsulfon, Dimethylsulfoxid sowie Thiophen.

Beispiele für geeignete anorganische Lösungsmittel sind Wasser, Ammoniak, Hydrazin und Schwefeldioxid.

Vorzugsweise werden die Silan-modifizierten Polyvinylalkohole in Lösungsmittelgemischen, besonders bevorzugt in wässrigen Lösungsmittelgemischen gelöst. Beispiele für bevorzugte wässrige Lösungsmittelgemische sind Gemische von Wasser und einem oder mehreren Lösungsmittel ausgewählt aus der Gruppe umfassend Amine, Alkohole, Amide, Ether und Sulfoxide. Beispiele für besonders bevorzugte wässrige Lösungsmittelgemische sind Gemische von Wasser und einem oder mehreren Lösungsmittel ausgewählt aus der Gruppe umfassend N-Methylpiperazin, Aminoethanol, N,N-Diethylaminoethanol, Dimethylformamid, Methanol, Ethanol, Isopropanol, Tetrahydrofuran sowie Dimethylsulfoxid. Das Volumenverhältnis von Wasser zu den organischen Lösungsmitteln beträgt bei diesen Gemischen vorzugsweise 10:1 bis 1:10 und besonders bevorzugt 10:1 bis 6:4.

Am meisten bevorzugte Lösungsmittelgemische sind Gemische aus Wasser und N-Methylpiperazin sowie einem oder mehreren weiteren Lösungsmitteln ausgewählt aus der Gruppe umfassend Aminoethanol, N,N-Diethylaminoethanol, Dimethylformamid, Tetrahydrofuran, Dimethylsulfoxid; Wasser und N,N-Diethylaminoethanol sowie einem oder mehreren weiteren Lösungsmitteln ausgewählt aus der Gruppe umfassend Dimethylformamid, Tetrahydrofuran, Dimethylsulfoxid; Wasser, Dimethylformamid sowie einem oder mehreren weiteren Lösungsmitteln ausgewählt aus der Gruppe umfassend Aminoethanol und Dimethylsulfoxid. Bevorzugte Mischungsverhältnisse der am meisten bevorzugten Lösungsmittelgemische aus Wasser, einem Lösungsmittel aus der Gruppe N-Methylpiperazin, N,N-Diethylaminoethanol und Dimethylformamid sowie einem weiteren der vorgenannten Lösungsmittel betragen 9:1:1 bis 1:2:3, besonders bevorzugt 4:1:1 bis 1:2:2 und am meisten bevorzugt 1:1:1.

Zur Herstellung der Lösungen der Silan-modifizierten Polyvinylalkohole in dem oder den vorgenannten Lösungsmitteln können das Lösungsmittel bzw. das Lösungsmittelgemisch beispielsweise vorgelegt und der Silan-modifizierten Polyvinylalkohol hinzugegeben werden. Vorzugsweise werden die Silan-modifizierten Polyvinylalkohole vorgelegt und das Lösungsmittel bzw. das Lösungsmittelgemisch hinzugegeben. Besonders bevorzugt werden die Silan-modifizierten Polyvinylalkohole vorgelegt, in einem oder mehreren organischen Lösungsmitteln gelöst und anschließend mit Wasser versetzt. Das Auflösen der Silan-modifizierten Polyvinylalkohole in den Lösungsmitteln kann durch Erwärmen beschleunigt werden. Bevorzugt sind hierbei Temperaturen von 10 bis 160°C, besonders bevorzugt von 30 bis 100°C und am meisten bevorzugt von 40 bis 80°C.

Die Lösungen der Silan-modifizierten Polyvinylalkohole haben einen Gehalt an Silan-modifizierten Polyvinylalkoholen von vorzugsweise 1 bis 70 Gew.-%, besonders bevorzugt von 2 bis 30 Gew.-% und am meisten bevorzugt von 5 bis 10 Gew.-%, bezogen auf des Gewicht der Lösungen der Silan-modifizierten Polyvinylalkohole.

Die Lösungen der Silan-modifizierten Polyvinylalkohole können ein oder mehrere weitere Additive enthalten, wie beispielsweise anorganische Salze oder organische Polymere. Beispiele für geeignete anorganische Salze sind Erd-/Alkali-Halogen, Zink- oder Cadmium-Salze, insbesondere LiF, NaF, KF, LiCl, NaCl, KCl, MgCl₂, CaCl₂, ZnCl₂ oder CdCl₂. Als organische Polymere werden vorzugsweise wasserlösliche Polymere eingesetzt, wie beispielsweise Polyethylenglykole, Polypropylenglykole, Polypropylenethylenglykole, Polyvinylpyrrolidine, Polyvinylalkohole oder sulfonierte Polystyrole. Mit diesen Additiven kann die Hydrophilie bzw. die Hydrophobie der Membran beeinflusst werden.

Die Additive sind in den Lösungen der Silan-modifizierten Polyvinylalkohole vorzugsweise zu 0,01 bis 50 Gew.-%, besonders bevorzugt zu 0,1 Gew.-% bis 15 Gew.-% und am meisten bevorzugt zu 1 bis 5 Gew.-% enthalten, bezogen auf des Gewicht der Lösungen der Silan-modifizierten Polyvinylalkohole. Bevorzugte Lösungen enthalten Erd-/Alkali-Halogenide, insbesondere 2 Gew.-% LiCl, und Poly(vinyl pyrrolidon), insbesondere 3 Gew.-% Poly(vinyl pyrrolidin).

Die Lösungen der Silan-modifizierten Polyvinylalkohole können ein oder mehrere Zusatzmittel enthalten, wie beispielsweise Alkoxy-funktionelle Silane der allgemeinen Formeln (3) oder (4)

(OR')ₙSi(R'')ₘ(Y)ₒ (3),

wobei
n für 1, 2, 3 oder 4,
m für 0, 1, 2 oder 3,
o für 0, 1, 2 oder 3 steht,
mit der Maßgabe, dass die Summe aus n, m und o 4 ergibt, oder

(OR')ₚR''_{q}Si-X-Si(OR')ₚR_{q}'' (4),

wobei
p für 1, 2 oder 3,
q für 0, 1 oder 2 steht,
mit der Maßgabe, dass die Summe aus p und q 3 ergibt, und wobei OR' und R" die bereits beschriebenen Bedeutungen haben und
Y eine OH-Funktion, eine gegebenenfalls mit Halogen-, Hydroxyl- , Amino-, Epoxy-, Phosphonate-, Thiol-, Carbamat-substituierte Kohlenstoffatomkette mit 1-18 C-Atomen bedeutet, wobei der Alkylrest durch nicht benachbarte Sauerstoff-, Schwefel-, oder NR-Gruppen unterbrochen sein kann, und
X eine Kohlenstoffatomkette mit 1-18 Kohlenstoffatomen bedeutet, wobei die Kohlenstoffkette durch nicht benachbarte Sauerstoff-, Schwefel-, oder NR-Gruppen unterbrochen sein kann.

Beispiele für geeignete Alkoxy-funktionelle Silane der Formeln 3 und 4 umfassen Tetramethoxysilan, Tetraethoxysilan, Tetra-propoxysilan, Tetrabutoxysilan, Methyl-trimethoxysilan, Methyltriethoxysilan, Ethyl-trimethoxysilan, Ethyl-triethoxysilan, Propyl-trimethoxysilan, Propyl-triethoxysilan, Propyl-diethoxymethylsilan, Propyl-dimethoxymethylsilan, Dimethyl-dimethoxysilan, Dimethyl-diethoxysilan, Trimethy-methoxysilan, Trimethyl-ethoxysilan, Phenyl-trimethoxysilan, Phenyl-triethoxysilan; aminofunktionelle Silane, wie z.B. Aminopropyl-trimethoxysilan, Aminopropyl-triethoxysilan, Aminoethylaminopropyltrimethoxysilan, Aminoethylaminopropyl-triethoxysilan, ortho-Aminophenyl-triethoxysilan, meta- Aminophenyl-triethoxysilan, para-Aminophenyl-triethoxysilan, ortho-Aminophenyl-trimethoxysilan, meta- Aminophenyl-trimethoxysilan, para-Aminophenyl-trimethoxysilan, Cyclohexylaminopropyl-trimethoxysilan, Cyclohexylaminopropyl-trimethoxysilan, N,N-Dimethylaminopropyl-trimethoxysilan, N,N-Dimethylaminopropyl-triethoxysilan, Aminomethyl-trimethoxysilan, Aminomethyl-methyldimethoxysilan, Aminomethyl-dimethylmethoxysilan, Aminomethyl-triethoxysilan, Aminomethyl-methyldiethoxysilan, Aminomethyl-dimethylethoxysilan, Cyclohexylaminomethyl-trimethoxysilan, Anilinomethyl-trimethoxysilan, N-Piperazinomethyl-trimethoxysilan, N-Piperazinomethyl-triethoxysilan, N-Piperazinomethyl-methyldimethoxysilan, N-Piperazinomethyl-methyldiethoxysilan, N-Piperazinomethyldimethylmethoxysilan, N-Piperazinomethyl-dimethylethoxysilan, N,N-Dimethylaminomethyl-trimethoxysilan, N-Benzimidazolylpropyl-trimethoxysilan, N-Benzimidazolylpropyl-triethoxysilan, N-Imidazolyl-trimethoxysilan, N-Imidazolyl-triethoxysilan; epoxyfunktionelle Silane, wie 3-Glycidoxypropyltrimethoxysilan, 3-Glycidoxypropyltriethoxysilan, 5,6-Epoxyhexyltrimethoxysilan, 5,6-Epoxyhexyltriethoxysilan, 2-(3,4-Epoxycyclohexyl)ethyl-trimethoxysilan oder 2-(3,4-Epoxycyclohexyl)ethyltriethoxysilan; Chlorsilane, wie Chlormethyldimethylmethoxysilan, Chlormethylmethyldimethoxysilan, Chlormethyltrimethoxysilan, Chlormethyldimethylethoxysilan, Chlormethylmethyldiethoxysilan, Chlormethyltriethoxysilan, Chlorpropyldimethylmethoxysilan, Chlorpropylmethyldimethoxysilan, Chlorpropyltrimethoxysilan, Chlorpropyldimethylethoxysilan, Chlorpropylmethyldiethoxysilan und Chlorpropyltriethoxysilan; isocyanat funktionelle Silane, wie z.B. Methylisocyanat-trimethoxysilan, Methylisocyanat-triethoxysilan, Methylisocyanat-dimethoxymethylsilan, Methylisocyanat-diethoxymethylsilan, Methylisocyanat-methoxydimethylsilan, Methylisocyanat-ethoxydimethylsilan, Propylisocyanat-trimethoxysilan, Propylisocyanat-triethoxysilan, Propylisocyanat-dimethoxymethylsilan, Propylisocyanat-diethoxymethylsilan, Propylisocyanat-methoxydimethylsilan) und Propylisocyanat-ethoxydimethylsilan; Bisalkoxy- oder Bisacetoxysilane, wie Bis(trimethoxysilyl)methan, Bis (dimethoxymethylsilyl) methan, Bis (methoxydimethylsilyl)methan, Bis(triethoxysilyl)methan, Bis(diethoxymethylsilyl)methan, Bis(ethoxydimethylsilyl)methan, Bis-(trimethoxysilyl)ethan, Bis(dimethoxymethylsilyl)ethan, Bis(methoxydimethylsilyl)ethan, Bis(triethoxysilyl)ethan, Bis(diethoxymethylsilyl)ethan, Bis(ethoxydimethylsilyl)ethan, Bis-(trimethoxysilyl)octan, Bis(dimethoxymethylsilyl)octan, Bis(methoxydimethylsilyl)octan, Bis(triethoxysilyl)octan, Bis(diethoxymethylsilyl)octan, Bis(ethoxydimethylsilyl)octan, Bis-(trimethoxysilylproypl)amin, Bis(dimethoxymethylsilylpropyl)-amin, Bis(methoxydimethylsilylpropyl)amin, Bis(triethoxysilyl-propyl)amin, Bis(diethoxymethylsilylpropyl)amin und Bis(ethoxy-dimethylsilylpropyl)amin.

Die Zusatzmittel sind in den Lösungen der Silan-modifizierten Polyvinylalkohole vorzugsweise zu ≤ 50 Gew.-%, besonders bevorzugt zu 0,1 Gew.-% bis 20 Gew.-% und am meisten bevorzugt zu 0,1 bis 10 Gew.-%, bezogen auf das Gewicht der Silan-modifizierten Polyvinylalkohole, enthalten.

Die Lösungen der Silan-modifizierten Polyvinylalkohole können weitere gängige Hilfsmittel enthalten, wie beispielsweise Verlaufshilfsmittel, oberflächenaktive Substanzen, Haftvermittler, Lichtschutzmittel, wie UV-Absorber und/oder Radikalfänger, Thixotropiermittel, Biozide, wie Fungizide oder Bakterizide, insbesondere Methylisothiazolone oder Benzisothiazolone, sowie weitere Fest- und Füllstoffe.

Gegebenenfalls enthalten die Lösungen der Silan-modifizierten Polyvinylalkohole ein oder mehrere Vernetzungskatalysatoren. Beispiele für geeignete Vernetzungskatalysatoren sind organische Zinnverbindungen, wie Dibutylzinndilaurat, Dioctylzinndilaurat, Dibutylzinndiacetylacetonat, Dibutylzinndiacetat oder Dibutylzinndioctoat; organische Titanate, wie Titan(IV)isopropylat; Eisen(III)-Verbindungen, wie Eisen(III)-acetylacetonat; Amine, wie Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenlyamin; organische oder anorganische Brönstedtsäuren, wie Essigsäure, Trifluoressigsäure, Salzsäure, Phoshorsäure oder deren Mono- oder Diester, wie z.B. Butylphosphat, Isopropylphosphat, Dibutylphosphat; Säurechloride, wie Benzoylchlorid; organische oder anorganische Brönstedtbasen, wie Lithiumhydroxid, Natriumhydroxid, Kaliumhydroxid, Ammoniak, Trialkylamine, wie z.B. Trimethylamin. Bevorzugt ist Salzsäure.

Vernetzungskatalysatoren werden vorzugsweise zu 0 bis 10 Gew.-%, besonders bevorzugt zu 0,01 bis 10 Gew.-% eingesetzt, bezogen auf das Gewicht der Silan-modifizierten Polyvinylalkohole.

Ein weiterer Gegenstand der Erfindung sind Flachmembranen erhältlich durch Auftragen einer oder mehrerer Lösungen der Silan-modifizierten Polyvinylalkohole auf ein Substrat sowie Trocknung und Vernetzung der aufgetragenen Silan-modifizierten Polyvinylalkohole.

Ein weiterer Gegenstand der Erfindung sind Verfahren zur Herstellung von Flachmembranen durch Auftragen einer oder mehrerer Lösungen der Silan-modifizierten Polyvinylalkohole auf ein Substrat sowie Trocknung und Vernetzung der aufgetragenen Silan-modifizierten Polyvinylalkohole.

Die Substrate enthalten vorzugsweise ein oder mehrere Stoffe aus der Gruppe umfassend Metalle, Metalloxide, Polymere oder Glas. Die Substrate können dabei in Form von Platten, Folien, gewobenen oder vorzugweise nichtgewobenen Netzen oder besonders bevorzugt in Form von nichtgewobenen Vliesen eingesetzt werden. Substrate auf Basis von Metall enthalten beispielsweise Titan, Eisen, Kupfer, Aluminium oder Legierungen enthaltend die vorgenannten Metalle. Substrate auf Basis von Metalloxiden enthalten beispielsweise Silicium-, Aluminium-, Zirkonium-, Titanoxide oder Mischungen dieser Metalloxide. Substrate auf Basis von Polymeren enthalten beispielsweise Polyamide, Polyimide, Polyetherimide, Polycarbonate, Polybenzimidazole, Polyethersulfone, Polyester, Polysulfone, Polytetrafluorethylene, Polyurethane, Polyvinylchloride, Celluloseacetate, Polyvinylidenfluoride, Polyetherglykole, Polyethylenterephthalat (PET), Polyaryletherketone, Polyacrylnitril, Polymethylmethacrylate, Polyphenylenoxide, Polycarbonate, Polyethylene oder Polypropylene. Bevorzugt sind hierbei Polymere mit einer Glasübergangstemperatur Tg von mindestens 80°C. Substrate auf Basis von Glas enthalten beispielsweise Quarzglas, Bleiglas, Floatglas oder Kalk-Natron-Glas.

Bevorzugte Netz- oder Vlies-Substrate enthalten Glas-, Carbon-, Aramid-, Polyester-, Polyethylene-, Polypropylene-, Polyethylene/Polypropylene-Copolymer- oder PolyethylenterephthalatFasern.

Die Schichtdicke der Substrate beträgt vorzugsweise ≥ 1 µm, besonders bevorzugt ≥ 50 µm, ganz besonders bevorzugt ≥ 100 µm und vorzugsweise ≤ 2 mm, besonders bevorzugt ≤ 600 µm, ganz besonders bevorzugt ≤ 400 µm. Am meisten bevorzugte Bereiche für die Schichtdicke der Substrate sind die aus den vorgenannten Werten formulierbaren Bereiche.

Die Substrate sind vorzugsweise porös. Poröse Substrate haben Porendurchmesser von vorzugsweise 1 nm bis 5 µm und besonders bevorzugt von 5 nm bis 500 nm. Bei den porösen Substraten handelt es sich vorzugsweise um Polymere oder Metalloxide. Poröse Substrate haben vorzugsweise eine asymmetrische Porenstruktur, d.h. die Poren haben entlang des Querschnitts des porösen Substrats unterschiedliche Durchmesser. Als poröse Substrate sind Mikrofiltrations-, Ultrafiltrations- oder Nanofiltrationsmembranen besonders geeignet.

Besonders bevorzugte Substrate bestehen aus Vliesen, welche zusätzlich auf der Oberfläche eine poröse Beschichtung besitzen. Die poröse Beschichtung besteht vorzugsweise aus Polysulfon, Polyethersulfon, Polyimid, Celluloseacetat, Polytetrafluorethylen, Polyvinylidenfluorid oder Polyurethan. Die Dicke der porösen Beschichtung beträgt vorzugsweise mindestens 20 µm, ganz bevorzugt mindestens 150 µm, besonders bevorzugt mindestens 500 µm und insbesondere zwischen 50 und 150 µm.

Die Oberflächen der Substrate können mit weiteren Stoffen modifiziert sein, wie beispielsweise mit Verlaufshilfsmitteln, oberflächenaktiven Substanzen, Haftvermittlern oder Lichtschutzmitteln, wie UV-Absorber und/oder Radikalfänger. Die Substrate können weiterhin mit Ozon oder UV-Licht vorbehandelt sein.

Die Lösungen der Silan-modifizierten Polyvinylalkohole werden vorzugsweise bei Temperaturen von ≥ 0°C, besonders bevorzugt von 20 bis 60°C und am meisten bevorzugt von 20 bis 50°C auf das Substrat aufgetragen. In einer bevorzugten Ausführungsform wird das Substrat auf eine Temperatur von 20 bis 25°C und die Lösungen der Silan-modifizierten Polyvinylalkohole auf eine Temperatur von 40 bis 60°C temperiert.

Das Auftragen der Lösungen der Silan-modifizierten Polyvinylalkohole auf das Substrat erfolgt vorzugsweise mittels eines Rakels oder durch Meniskusbeschichtung, Gießen, Sprühen, Siebdruck, Tiefdruck oder Spin-on-Disk. Die so aufgetragenen Lösungen werden im Folgenden auch als Silan-modifizierte Polyvinylalkohol-Filme bezeichnet werden und haben Filmdicken von vorzugsweise ≥ 1 µm, besonders bevorzugt ≥ 20 µm, insbesondere ≥ 50 µm und vorzugsweise ≤ 2000 µm, besonders bevorzugt ≤ 500 µm, insbesondere ≤ 300 µm. Am meisten bevorzugte Bereiche für die Filmdicke sind die aus den vorgenannten Werten formulierbaren Bereiche.

Die mit Silan-modifizierten Polyvinylalkohol-Filmen versehenen Substrate, im folgenden auch als Membran-Vorstufen bezeichnet, können nun durch Trocknung und Vernetzung (Variante A)) oder nach einem Phaseninversionsprozess (auch bekannt unter dem Namen Loeb-Sourirajan-Prozess) (Variante B)) zu Flachmembranen weiterverarbeitet werden. Im Zuge der Vernetzung bilden die Silan-modifizierten Polyvinylalkohole über ihre Silan-Einheiten im Allgemeinen C-Si-O-Si-C-Bindungen. Durch die Trocknung werden flüchtige Bestandteile, wie Lösungsmittel, durch Verdampfen üblicherweise teilweise oder vollständig entfernt.

Bei Variante A) erfolgt die Trocknung und Vernetzung der Membran-Vorstufen vorzugsweise bei Temperaturen zwischen 20 und 200°C und besonders bevorzugt zwischen 20 und 150°C. Die Trocknung und Vernetzung kann bei beliebigen Drücken durchgeführt werden, wie bei Unterdruck, bei Überdruck oder bei Normaldruck. Die Dauer der Trocknung und Vernetzung hängt davon ab, ob ein Vernetzungskatalysator zugegen ist, sowie von der Art und der Einsatzmenge des Vernetzungskatalysators, und beträgt üblicherweise eine Minute bis mehrere Stunden, vorzugsweise bis zu 24 Stunden, besonders bevorzugt bis zu 13 Stunden.

Gegebenenfalls kann eine Nachvernetzung durchgeführt werden, indem das so erhaltene Produkt einer Atmosphäre enthaltend Säuren oder Säureanhydride, wie beispielsweise Schwefelsäure, Salzsäure, Maleinsäureanhydrid, Bromwasserstoffsäure oder deren Mischungen, ausgesetzt wird. Nachvernetzung kann auch durch Bestrahlung mit Gamma-Strahlen erfolgen. Auf diese Weise kann die Stabilität und Selektivität der Membranen weiter verbessert werden.

Im Anschluss an die Trocknung und Vernetzung können die gegebenenfalls eingesetzten Vernetzungskatalysatoren deaktiviert werden, beispielsweise durch Zugabe von Katalysator-Giften, wie dem Fachmann bekannte Säuren oder Basen.

Die so erhaltenen Produkte können direkt als Membranen zur Trennung von Gemischen eingesetzt werden. Alternativ können die so erhaltenen getrockneten und vernetzten Silan-modifizierten Polyvinylalkohol-Filme vom Substrat abgenommen werden und gegebenenfalls auf andere Substrate, wie Vliese, aufgebracht werden, vorzugsweise bei erhöhten Temperaturen und unter Anwendung von Druck, beispielsweise in einer Heißpresse oder in einem Laminiergerät. Um die Haftung auf den anderen Substraten zu verbessern, können Haftvermittler eingesetzt werden.

In Variante B) werden die Membranen nach einem Phaseninversionsprozess hergestellt. Dazu werden die Membran-Vorstufen zunächst in ein Fällmedium gegeben. Das Fällmedium ist vorzugsweise eine Flüssigkeit, in der die Löslichkeit der Silan-modifizierten Polyvinylalkohole bei 20°C ≤ 5 Gew.-% beträgt.

Bevorzugte Fällmedien sind ein oder mehrere Lösungsmittel aus der Gruppe umfassend Alkohole, Ketone oder Stickstoff-haltige Lösungsmittel. Besonders bevorzugt sind ein oder mehrere Lösungsmittel ausgewählt aus der Gruppe umfassend Alkohole, wie Methanol, Ethanol, Butanol oder Isopropanol, Stickstoff-haltige Lösungsmittel, wie Acetonitril oder N-Methyl-2-pyrrolidon (NMP), oder Ketone, wie Aceton. Am meisten bevorzugt sind Isopropanol oder Aceton. Der pH-Wert der Fällmedien ist vorzugsweise ≥ 8 oder ≤ 6. Die Einstellung des pH-Wertes kann mittels dem Fachmann bekannten Säuren, Basen oder Puffern erfolgen.

Die Fällmedien haben eine Temperatur von vorzugsweise 0 bis 80°C, besonders bevorzugt von 0 bis 30°C und am meisten bevorzugt von 23 bis 26°C.

Die Fällmedien können weitere Bestandteile enthalten, wie beispielsweise anorganische Salze, insbesondere Natriumsulfat. Daneben kann das Fällmedium auch weitere Bestandteile enthalten, welche weiter oben als Additive, Zusatzmittel oder Hilfsmittel für die Lösungen der Silan-modifizierten Polyvinylalkohole aufgeführt sind. Weiterhin kann das Fällmedium auch oberflächenaktive Substanzen enthalten. Die Konzentration der vorgenannten weiteren Bestandteile im Fällmedium beträgt vorzugsweise bis zu 10 Gew.-%, bezogen auf die Gesamtmasse des Fällmediums.

Die Membran-Vorstufen können vor dem Eintauchen in das Fällmedium vorgetrocknet werden, vorzugsweise bei Temperaturen von mindestens 10°C, besonders bevorzugt bei 25 bis 150°C und am meisten bevorzugt bei 20 bis 100°C. Die Vortrocknung dauert vorzugsweise bis zu 10 Minuten, besonders bevorzugt 7 Sekunden bis 10 Minuten, am meisten bevorzugt 10 und 60 Sekunden.

Die Membran-Vorstufen verbleiben vorzugsweise 10 s bis 20 h, besonders bevorzugt mindestens 30 s bis 60 min und am meisten bevorzugt 3 bis 7 min im Fällmedium.

Anschließend werden die so behandelten Membran-Vorstufen aus dem Fällmedium entnommen und einer Trocknung und Vernetzung unterzogen, unter den Bedingungen, wie sie bereits als Variante A) beschrieben sind. Auf diese Weise werden schließlich Membranen erhalten.

Die nach dem Phaseninversionsprozess hergestellten Membranen weisen im Allgemeinen eine poröse Struktur auf. Das freie Volumen beträgt vorzugsweise 5 bis 90 Vol.-%, besonders bevorzugt 20 bis 80 Vol.-% und am meisten bevorzugt 35 Vol.-% bis 75 Vol.-%.

Ein weiterer Gegenstand der Erfindung sind Hohlfasermembranen erhältlich durch Verspinnen von Lösungen der Silan-modifizierten Polyvinylalkohole sowie Trocknung und Vernetzung der Silan-modifizierten Polyvinylalkohole.

Ein weiterer Gegenstand der Erfindung sind Verfahren zur Herstellung von Hohlfasermembranen durch Verspinnen von Lösungen der Silan-modifizierten Polyvinylalkohole und abschließende Trocknung und Vernetzung.

Unter Verspinnen versteht der Fachmann die Herstellung von Fasern, indem Polymerlösungen durch Hohlfaserspinndüsen verdüst werden. Hohlfasern an sich sind dem Fachmann bekannt und sind im Allgemeinen zylinderförmige Fasern, die im Querschnitt einen oder mehrere durchgängige Hohlräume besitzen; derartige Hohlräume werden auch als Kanäle bezeichnet.

Der Außendurchmesser der Hohlfasern beträgt vorzugsweise 10 µm bis 5 mm, besonders bevorzugt 100 µm bis 2 mm und am meisten bevorzugt 300 µm bis 1000 µm. Der Innendurchmesser der Hohlfasern, d.h. der Durchmesser der Kanäle, beträgt vorzugsweise 8 µm bis 4,5 mm, besonders bevorzugt 80 µm bis 1,9 mm und am meisten bevorzugt 280 µm bis 900 µm. Die Hohlfasern können beliebig lang sein.

Während der Herstellung der Hohlfasermembran befindet sich in den Hohlräumen der Hohlfasern üblicherweise ein Gas, ein Gasgemisch oder eine Flüssigkeit, vorzugsweise Luft, insbesondere Druckluft, oder Stickstoff, Sauerstoff, Kohlendioxid, Wasser oder organische Lösungsmittel, wie Kohlenwasserstoffe, halogenierte Kohlenwasserstoffe, Ether, Alkohole, Ketone, Säuren, Ester, Stickstoff-haltige Lösungsmittel oder Schwefel-haltige Lösungsmittel. Besonders bevorzugt sind die Hohlräume mit Toluol befüllt. Auf diese Weise kann ein Kollabieren der Hohlräume der Hohlfasern verhindert werden. Des Weiteren kann auf diese Weise gesteuert werden, dass die Vernetzung der Silan-modifizierten Polyvinylalkohol auf der Innenseite oder auf der Außenseite der Hohlfaser oder aber in der Hohlfaser erfolgt.

Das Verspinnen erfolgt vorzugsweise bei Temperaturen von 20 bis 150°C. Bei der Herstellung der Hohlfasern können gegebenenfalls ein oder mehrere weitere Polymerlagen co-versponnen werden. Auf diese Weise werden mehrlagige Hohlfasermembranen erhalten.

Die so erhaltenen Hohlfasern werden auch als Membran-Vorstufen bezeichnet, die nun durch Trocknung und Vernetzung (Variante A)) oder nach dem Phaseninversionsprozess (Variante B)) zu Hohlfasermembranen weiterverarbeitet werden können - wie oben für Flachmembranen beschrieben.

Die vernetzte Silan-modifizierte Polyvinylalkohole enthaltende Schicht der erfindungsgemäßen Membranen besteht vorzugsweise zu mindestens 50 Gew.-%, besonders bevorzugt zu mindestens 80 Gew.-%, ganz besonders bevorzugt zu mindestens 90 Gew.-% und am meisten bevorzugt zu mindestens 95 Gew.-% aus den vernetzten Silan-modifizierten Polyvinylalkoholen, bezogen auf die Gesamtmasse der vorgenannten Schicht.

In den Membranen sind vorzugsweise 10 bis 90% und besonders bevorzugt 60 bis 90% der Siliziumatome der ursprünglich eingesetzten Silan-modifizierten Polyvinylalkohole vernetzt, bezogen auf die Gesamtzahl der Siliziumatome der eingesetzten Silan-modifizierten Polyvinylalkohole. Unter Vernetzung der Siliziumatome werden im Allgemeinen die Ausbildung von C-Si-O-Si-C-Bindungen verstanden. Der Umfang der Vernetzung kann über die Anzahl der hydrolysierbaren Siliziumbindungen, d.h. der vernetzenden Gruppen der Silan-Einheiten oder über den Anteil der Silan-Einheiten der Silan-modifizierten Polyvinylalkohole gesteuert werden.

Die erfindungsgemäßen Membranen weisen Schichtdicken auf Basis der Silan-modifizierten Polyvinylalkohole von vorzugsweise 0,1 bis 2000 µm, besonders bevorzugt 1 bis 750 µm, ganz besonders bevorzugt von 5 bis 100 µm und am meisten bevorzugt von 5 bis 20 µm auf.

Die so erhaltenen Membrane können direkt zur Trennung von Gemischen eingesetzt werden oder alternativ einer weiteren, gängigen Nachbehandlung unterzogen werden, wie beispielsweise einer thermischen Behandlung, Behandlung mit Hoch- oder NiederdruckPlasma, Bestrahlung mit Gamma-, Röntgen-, Mikrowellen- oder aktinischen Strahlung oder einer Oberflächenmodifikation, beispielsweise einer Oberflächenbeschichtung.

Die Oberflächenbeschichtung der Membranen hat vorzugsweise eine Dicke von 10 nm bis 500 µm, besonders bevorzugt 100 nm bis 50 µm und am meisten bevorzugt 500 nm bis 10 µm. Für die Beschichtung eignen sich beispielsweise Polymere wie Polyamide, Polyimide, Polyetherimide, Polycarbonate, Polybenzimidazole, Polyethersulfone, Polyester, Polysulfone, Polytetrafluorethylene, Polyurethane, Silicone, Polydimethylsilicone, Polymethylphenylsilicone, Polymethyloctylsilicone, Polymethylalkylsilicone, Polymethylarylsilicone, Polyvinylchloride, Polyetherglykole, Polyethylenterephthalat (PET), Polyaryletherketone, Polyacrylnitril, Polymethylmetacrylate, Polyphenylenoxide, Polycarbonate, Polyethylene oder Polypropylene. Die Polymere können mit üblichen Methoden auf die Membranen aufgebracht werden, beispielsweise mittels Laminieren, Sprühen, Rakeln oder Kleben. Vorzugsweise wird eine derartige Beschichtung auf Membranen mit Poren von 10 nm bis 5 µm aufgebracht.

Die erfindungsgemäßen Membranen eignen sich zum Einsatz für alle gängigen Verfahren zur Trennung von Gemischen mittels Membranen, wie Reverse Osmose, Gastrennung, Pervaporation, Nanofiltration, Ultrafiltration oder Mikrofiltration. Mit den erfindungsgemäßen Membranen können fest-fest, gasförmiggasförmig, fest-gasförmig oder flüssig-gasförmig, insbesondere flüssig-flüssig und flüssig-fest Gemische getrennt werden. Nach den erfindungsgemäßen Verfahren sind Membranen mit kompakten Strukturen oder auch mit Porenstrukturen zugänglich.

Die erfindungsgemäßen Membranen zeichnen sich bei Einsatz als Hilfsmittel zur Trennung von Gemischen durch vorteilhafte anwendungstechnische Eigenschaften aus. So quellen die erfindungsgemäßen Membrane in Gegenwart von Lösungsmitteln, wie Wasser, selbst bei Temperaturen über 70°C in deutlich geringerem Umfang als herkömmliche Membranen. Die erfindungsgemäßen Membrane sind durch eine relativ hohe Hydrolysestabilität charakterisiert. Die erfindungsgemäßen Membranen zeichnen sich durch eine hohe und selektive Durchlässigkeit für Wasser, eine bessere Trennung von Ethanol-Wasser-Gemischen, durch eine hohe Trennleistung, Trennselektivität und einen hohen Durchsatz an zu trennendem Gemisch aus.

Die erfindungsgemäßen Membranen eignen sich besonders für die Reinigung von wässrigen Mischungen. So zeigen die erfindungsgemäßen Membranen hohe Trennleistungen bei Trennung von Wasser/Ethanol-, Wasser/Isopropanol-, Wasser/Methanol-, Wasser/Essigsäure- und Wasser/organische Ester-Gemischen wie auch bei Trennung von Mischungen aus organischen Lösungsmitteln, beispielsweise Toluol/Aceton- oder Dichlormethan/Ethanol-Gemischen. Die erfindungsgemäßen Membranen eignen sich auch zur Entfernung von Wasser aus Kraftstoffen, wie Benzin, Bioethanol oder Dieselkraftstoffen. Dabei lassen sich die Membranen aufgrund ihres geringen Platzbedarfs auch in Fahrzeugen einbauen. Weitere Einsatzgebiete der erfindungsgemäßen Membranen sind Dampfpermeationsanlagen zur Trennung von Ethanol-Wasser-Gemischen oder für die Abtrennung von flüchtigen, organischen Verunreinigungen (auch unter der Abkürzung VOC (volatile organic compounds) bekannt) aus Abwässern, beispielsweise zur Abtrennung von Benzol, Aceton, Isopropanol, Ethanol, Methanol, Xylene, Toluol, Vinylchlorid, Hexan, Aniline, Butanol, Acetaldehyd, Ethylenglykol, DMF, DMAC, Methyl-ethyl-ketone sowie Methyl-isobutyl-keton. Die erfindungsgemäßen Membranen können auch zur Abtrennung von gelösten Substanzen, wie NaCl, MgCl₂ oder CaCl₂, aus Wasser, wie Meerwasser, Brackwasser, Oberflächenwasser, Reinstwasser oder Industrieabwässer, eingesetzt werden. Die Membranen zeigen dabei sowohl die gewünschte Retention von gelösten Salzen als auch eine hohe Flusstransportrate. Besonders bevorzugt ist der Einsatz der Membranen für die Reverse Osmose zur Entsalzung von Meer-, Brack- und Oberflächenwasser zur Gewinnung von Trinkwasser. Die erfindungsgemäßen Membranen eignen sich auch für die Aufreinigung von Elektrotauchlack, z.B. in der Automobilindustrie, der Proteinaufreinigung, der Reinigung von Öl-Wasser-Emulsionen, z.B. für die Kühlung und das Schmieren von Werkstücken, sowie die industrielle Wasseraufreinigung von Abwässern mit partikelförmigen Verunreinigungen, z.B. Latexrückständen. Weitere typische Anwendungen sind die Entfernung von Bakterien oder Viren aus Wasser, die sterile Filtration von pharmazeutischen Produkten, der Sterilisation von Wein und Bier sowie die Herstellung von partikelfreiem Reinstwasser für die Elektroindustrie. Weitere Anwendungen für die erfindungsgemäßen Membranen sind beispielsweise in Membrane Technology and Applications, second Edition, R. W. Baker, New York, Wiley, 2004 beschrieben.

Die Membranen, d.h. die Flach- wie die Hohlfasermembranen, können zu den gängigen Membranmodulen verbaut werden, wie beispielsweise zu Hohlfasermodulen, spiralgewundenen Wickelmodulen, Platten-Modulen, Cross-Flow-Modulen oder Dead-end-Modulen.

Die nachfolgenden Beispiele dienen zur weiteren Erläuterung der Erfindung, ohne diese in irgendeiner Weise einzuschränken.

Soweit nicht anders angegeben sind alle Drücke 0,10 MPa (abs.) und alle Temperaturen 20 °C.

### Herstellung des Silan-modifizierten Vinylester-Copolymerisats:

### (Copolymerisat 1):

In einen 1000 ml Polymerisationsreaktor (drucklos) mit Ankerrührer und Rückflusskühler werden 300 g Methanol, 174,6 g Vinylacetat (VAc), 60,2 g Vinyltrimethoxysilan (VTMO) und 21,8 g t-Butylperoxopivalat (75 Gew.-% in Aliphaten, Halbwertszeit 1h bei 74 °C) vorgelegt. Der gesamt Ansatz wird im Reaktor auf 60 °C aufgeheizt und für 420 min bei dieser Temperatur gehalten. Anschließend werden flüchtige Bestandteile am Rotationsverdampfer (60 °C, 1 mbar) entfernt.

### Analyse des Festharzes:

Umsatz: > 99 Gew.-% (bezogen auf die Menge der eingesetzten Monomere VAc und VTMO); Mw (GPC, Elutionsmittel THF, Polystyrolstandards) 13300 g/mol, Mn 12400 g/mol, Dispersität (Mw/Mn) 1,1; Glasübergangstemperatur (aus DSC-Messung) 13 °C.

### Herstellung der Silan-modifizierten Polyvinylalkohole:

### Si-PVOH 1: (in Methanol):

In einen 1000 ml Rundkolben mit Rückflusskühler wurden 45,7 g Copolymerisat 1 in 456 g Methanol bei einer Temperatur von 70 °C gelöst. Anschließend wurden 4,6 g Lithiummethanolat (75 Gew.-% in Methanol) zudosiert und dann für 60 min bei 60 °C gerührt. Danach wurde ein sukzessiver Methanolaustausch durchgeführt, um Essigsäure bzw. Essigsäureester aus dem Ansatz zu entfernen. Das teilverseifte Polymer lag nach der Reaktion um dem Methanolaustausch als weiße Lösung vor mit einem Feststoffgehalt von 7,2 Gew.-%.
Die Lösung zeichnet sich durch eine hervorragende Lagerstabilität für mehrere Wochen bei Raumtemperatur aus.
Analyse des Silan-modifizierten Polyvinylalkohols:
Feststoffgehalt: 7,2 Gew.-% (methanolische Lösung),
Verseifungszahl VZ: 228 mgKOH/g.

### Si-PVOH 2: (in wässriger Lösung):

In einen 1000 ml Rundkolben mit Rückflusskühler wurden 51,0 g des in Beispiel 1 hergestellten Polymers in 510 g Methanol bei einer Temperatur von 80 °C gelöst. Im Anschluss daran wurden 5,1 g Lithiummethanolat (75 Gew.-% in Methanol) zu dem Ansatz zudosiert und für 1 h bei 60 °C gerührt. Nach Erreichen des Gelpunkts wird das Lösemittel Methanol sukzessive aus dem Ansatz abdestilliert und durch die gleiche Menge an Methanol ersetzt, um z.B. Reste von Essigsäure bzw. Essigsäuremethylester zu entfernen. Im Anschluss daran wird der Hauptteil des Methanols sukzessive durch Wasser bei 70 °C und 300 mbar ersetzt. Man erhält eine wässrige Lösung die für mehrere Wochen stabil ist.
Analyse des Silan-modifizierten Polyvinylalkohols:
Feststoffgehalt: 4 Gew.-% (wässrige Lösung)
Verseifungszahl: 41 mgKOH/g

### Herstellung von Membranen:

### Beispiel 1: Herstellung einer Membran aus Vollmaterial aus Si-PVOH 1:

Si-PVOH 1 wird mit Methanol auf einen Feststoffgehalt von 8,5 Gew.-% eingestellt. Anschließend werden 7,5 g dieser Lösung mit 100 µl HCl 10 Gew.-% versetzt und für 20 s gerührt. Diese Lösung wird in eine Polypropylen-Schale gegossen und im ersten Schritt an Raumtemperatur für 10 min getrocknet, im Anschluss daran bei 60 °C für 10 h getrocknet und anschließend bei 100 °C für 2 h getrocknet.
Man erhält eine hochtransparente und flexible Membran mit einer Schichtdicke von ca. 20 µm.

### Beispiel 2: Herstellung einer Membran mit Kompositstruktur aus Si-PVOH 1:

Si-PVOH 1 wird mit Methanol auf einen Feststoffgehalt von 8 Gew.-% eingestellt. Anschließend werden 7,5 g dieser Lösung mit 100 µl HCl 10 Gew.-% versetzt und für 1 min gerührt. Ein Teil der Lösung wird auf eine Ultrafiltrationsmembran (Typ: HT450, Tuffryn®, Fa. Pall, Fläche 50 cm², Porendurchmesser 0,45 µm, Material: Polysulfon) ausgegossen. Im Anschluss daran wird die Kompositmembran bei Raumtemperatur angetrocknet und bei 60 °C für 2 h und weiter 2 h bei 120 °C getrocknet.
Man erhält eine Kompositmembran mit einer geschlossenen trennselektiven Schicht, wobei die komplett geschlossene, defektfreie und flexible trennselektive Schicht fest mit der Ultrafiltrationsmembran verbunden ist. Die Schichtdicke der selektiven Schicht beträgt ca. 10 µm.

### Beispiel 3: Herstellung einer porösen Membran aus Si-PVOH 2:

Si-PVOH 2 wird mit Wasser und NMP auf einen Feststoffgehalt von 10 Gew.-% (Lösung mit Wasser/NMP-Mischungsverhältnis von 80/20) eingestellt. Im Anschluss daran wird diese Lösung auf eine Glasplatte mit einem Kammerrakel (Rakelhöhe 300 µm) gerakelt und für 2 min in eine mit Aceton gefülltes Inversionsbecken getaucht.
Danach kann die Membran an Luft getrocknet werden und von der Glasplatte entfernt werden. Für die thermische Nachbehandlung wird die poröse Membran bei 60 °C für 8 h und weitere 2 h bei 120 °C getrocknet.
Man erhält eine milchig trübe und flexible Membran, die im Raster-Elektronen-Mikroskop eine anisotrope Struktur im Querschnitt aufweist.
Die Membran verfügte auf der Oberfläche über Poren < 1 µm.

### Vergleichsbeispiel 4: Herstellung einer porösen Membran aus Polyvinylalkohol:

Aus einem Polyvinylalkohol (Viskosität 3,0 mPas (nach Höppler), Verseifungszahl VZ 14 mgKOH/g; der Polyvinylalkohol enthält keine Silan-Einheiten) wird eine 10 Gew.-% Lösung mit einem Wasser/NMP Mischungsverhältnis von 80/20 hergestellt. Im Anschluss daran wird diese Lösung auf eine Glasplatte mit einem Kammerrakel (Rakelhöhe 300 µm) gerakelt und in eine mit Aceton gefülltes Inversionsbecken getaucht.
Es fand eine Phasenseparation statt mit der Bildung poröser Membranstrukturen, was sich durch die Farbänderung von transparent nach milchig äußerte.
Danach wird die Membran an Luft getrocknet und von der Glasplatte entfernt. Für die thermische Nachbehandlung wird die poröse Membran bei 60 °C für 8 h und weitere 2 h bei 120 °C getrocknet.
Man erhält eine milchig trübe und flexible Membran, die im Raster-Elektronen-Mikroskop eine anisotrope Struktur im Querschnitt aufweist.

### Vergleichsbeispiel 5: Herstellung einer kompakten PVA-Membran mit Aldehyd-Vernetzung:

8 g einer wässrigen Lösung mit einem Festgehalt an Polyvinylalkohol von 10 Gew.-% (Viskosität (nach Höppler) 3,0 mPas, VZ 14 mgKOH/g) wird mit 0,5 g Glutaraldehyd und 0,1 g HCl 10 Gew.-% versetzt und in eine runde Polypropylen-Schale gegossen. Die Vernetzung erfolgt wie bei den Beispielen 1 bis 2 bei 60 °C für 2 h und anschließend 2 h bei 120 °C.
Die PVA-Membran lässt sich nach der Herstellung aus der Polypropylen-Schale entnehmen.

### Austestung der porösen Membranen aus Beispiel 3 und Vergleichsbeispiel 4:

Die Membran aus Beispiel 3 bzw. Vergleichsbeispiel 4 wurde in einem Ultrafiltrationsteststand mit einer Dextran-Testlösung näher nach Prüfvorschrift ASTM E-1343-90 untersucht.
Mit der erfindungsgemäßen Membran aus Beispiel 3 wurden die Dextrane getrennt. Die Membran war unter diesen Bedingungen stabil.
Die Membran aus Vergleichsbeispiel 4 löste sich dagegen nach kurzer Zeit in dem wässrigen Testmedium auf.

Hieraus wird die unzureichende Hydrolysebeständigkeit der nicht erfindungsgemäßen Membrane aus Polyvinylalkohol deutlich.

### Stabilitätsuntersuchungen:

Um zu überprüfen, ob die unterschiedlichen Membranen den Bedingungen in einer Pervaporationszelle standhalten, wurden die Membranen in der Testlösung (Ethanol/Wasser Gemisch, 70/30) für 6 h bei einer Temperatur von 80 °C gelagert.
Im Anschluss daran wurde die Gewichtszunahme und die Volumenänderung der Membranen bestimmt. Die Testergebnisse der drei Membranen sind in Tabelle 1 zusammengefasst.

**Tabelle 1: Ergebnisse aus den Stabilitätsuntersuchungen:**

| | Aufnahme in Gew.-% | Volumenänderung in Vol.% |
|---|---|---|
| Beispiel 1 | + 15 | + 10 |
| Beispiel 2 | + 15 | + 10 |
| Vergleichsbeispiel 5 | > + 200 | nicht zu bestimmen |

Wie aus der Tabelle 1 zu entnehmen ist, haben die erfindungsgemäßen Membranen (Beispiele 1 und 2) die gewünschte Stabilität, während die herkömmliche Membran (Vergleichsbeispiel 5) im Testmedium sehr stark aufquillt und ihre geometrische Form und mechanische Stabilität einbüßen.
Die erfindungsgemäßen Membranen weisen demgegenüber eine hervorragende Formstabilität und eine ausreichende Quellung auf.

### Untersuchungen im Pervaporationsteststand:

Die Membranen aus den Beispielen 1, 2 bzw. aus Vergleichsbeispiel 5 wurden in eine Pervaporationstestzelle eingesetzt und die Trennleistung bestimmt. Die Testbedingungen wurden bei allen drei Membranen konstant gehalten (Testmedium: Ethanol/Wasser 90/10 bzw. 70/30, Temperatur: 70°C, Vakuum: Permeatseite: 100 mbar).
Die Ergebnisse der Membranen werden in Tabelle 2 zusammengefasst. Das Permeat ist dabei der Anteil des Testmediums, der durch die Membran hindurchfließt. Das Retentat ist dagegen der Anteil des Testmediums, der nicht durch die Membran hindurchfließt.

**Tabelle 2: Ergebnisse der Pervaporationsuntersuchungen der Membranen 4, 5 und 7:**

| Membran | Ethanol-Gehalt des Testmediums [Gew.-%] | Wasser-Gehalt des Permeats [Gew.-%] | Ethanol-Gehalt des Retentats [Gew.-%] |
|---|---|---|---|
| Beispiel 1 | 90 | 95 | 99 |
| Beispiel 2 | 90 | 94 | 99 |
| Vergleichsbeispiel 5 | 90 | 82 | 95 |
| Beispiel 1 | 70 | 92 | 99 |
| Vergleichsbeispiel 5 | 70 | keine Messung möglich | |

Aus der Tabelle 2 geht hervor, dass die erfindungsgemäßen Membranen (Beispiele 1 und 2) eine sehr hohe Ausreinigung im Vergleich zu der herkömmlichen Membran (Vergleichsbeispiel 5) bewirken. Weiterhin können mit den erfindungsgemäßen Membranen ebenfalls Mischungen getrennt werden, die hohe Wasseranteile enthalten. Die herkömmliche Membran (Vergleichsbeispiel 5) quillt bei diesen Bedingungen sehr stark auf und reißt aufgrund der geringen mechanischen Belastbarkeit. Weiterhin waren die mit der Membran aus Vergleichsbeispiel 5 erreichten Flussraten deutlich geringer, da diese Membran stark quoll und damit eine deutlich höhere Transportbarriere aufgebaut hatte als die erfindungsgemäßen Membranen.

## Patentansprüche

1. Verwendung von Silan-modifizierten Polyvinylalkoholen zur Herstellung von Membranen, **dadurch gekennzeichnet, dass** die Silan-modifizierten Polyvinylalkohole erhältlich sind durch
a) radikalisch initiierte Copolymerisation von einem oder mehreren Vinylestern von unverzweigten oder verzweigten Carbonsäuren mit 1 bis 15 C-Atomen und
einem oder mehreren ethylenisch ungesättigten Silan-Verbindungen ausgewählt aus der Gruppe umfassend Verbindungen der allgemeinen Formeln
CR₂=CR-B-Si (OR')₃₋ₙ(R'')ₙ (1)
oder
CR₂=CRC (=O) -D-B-Si (OR')₃₋ₙ(R'')ₙ (2),
wobei
B für einen Aryl-, Heteroaryl- oder (CR₂)ₘ-Rest, in dem gegebenenfalls ein oder mehrere nicht benachbarte CR₂-Gruppen durch Heteroatome ersetzt sein können,
D für ein Heteroatom,
R für ein Wasserstoffatom, einen Alkyl- oder Aryl-Rest oder ein Heteroatom, das gegebenenfalls mit einem Wasserstoffatom oder einem Alkyl-, Aryl-Rest substituiert ist, OR' für einen Alkoxy-, Alkylcarboxy- oder Arylcarboxy-Rest,
R" für einen Alkyl- oder Aryl-Rest stehen und
n 0, 1 oder 2 und
m 0 bis 15 bedeuten, und
b) anschließende Verseifung der in Schritt a) erhaltenen Silan-modifizierten Vinylester-Copolymerisate.

2. Verwendung von Silan-modifizierten Polyvinylalkoholen nach Anspruch 1, **dadurch gekennzeichnet, dass** die ethylenisch ungesättigten Silan-Verbindungen ausgewählt werden aus der Gruppe umfassend Vinyltrimethoxysilan, Vinyldimethoxymethylsilan, Vinyldimethylmethoxysilan, Vinyltriethoxysilan, Vinyldiethoxymethylsilan, Vinyldimethylethoxysilan, Vinyltriisopropoxysilan, Vinyldiisopropoxymethylsilan, Vinyldimethylisopropoxysilan, Vinyltributoxysilan, Vinyldibutoxymethylsilan, Vinyldimethylbutoxysilan, Vinyltriacetoxysilan, gamma-Acryl- bzw. gamma-Methacryloxyisopropyltrialkoxysilan, gamma-Methacryloxymethyldi(alkoxy)methylsilan, gamma-Methacryloxydimethyl(alkoxy)silan, alpha-Methacryl-oxymethyltri(alkoxy)silan, alpha-Methacryloxymethyldi-(alkoxy)methylsilan und alpha-Methacryloxydimethyl(alkoxy)silan.

3. Verwendung von Silan-modifizierten Polyvinylalkoholen nach Anspruch 1 oder 2, **dadurch gekennzeichnet, dass** in Schritt a) 0,1 bis 30 Mol-% ethylenisch ungesättigte Silan-Verbindungen eingesetzt werden, bezogen auf die Gesamtmenge an Monomeren in Schritt a).

4. Flachmembranen erhältlich durch Auftragen einer oder mehrerer Lösungen der Silan-modifizierten Polyvinylalkohole aus Anspruch 1 bis 3 auf ein Substrat sowie Trocknung und Vernetzung der aufgetragenen Silan-modifizierten Polyvinylalkohole.

5. Hohlfasermembranen erhältlich durch Verspinnen von Lösungen der Silan-modifizierten Polyvinylalkohole aus Anspruch 1 bis 3 sowie Trocknung und Vernetzung der Silan-modifizierten Polyvinylalkohole.

6. Membranen nach Anspruch 4 bis 5, **dadurch gekennzeichnet, dass** 10 bis 90% der Siliziumatome der ursprünglich eingesetzten Silan-modifizierten Polyvinylalkohole vernetzt sind, bezogen auf die Gesamtzahl der Siliziumatome der eingesetzten Silan-modifizierten Polyvinylalkohole.

7. Membranen nach Anspruch 4 oder 6, **dadurch gekennzeichnet, dass** die vernetzte Silan-modifizierte Polyvinylalkohole enthaltende Schicht der Membranen zu mindestens 50 Gew.-% aus den vernetzten Silan-modifizierten Polyvinylalkoholen besteht, bezogen auf die Gesamtmasse der vorgenannten Schicht.

8. Verfahren zur Herstellung von Flachmembranen nach Anspruch 4, 6 oder 7 durch
α) Auftragen einer oder mehrerer Lösungen der Silan-modifizierten Polyvinylalkohole aus Anspruch 1 bis 3 auf ein Substrat,
β) gegebenenfalls Ausführung eines Phaseninversionsprozesses, und
γ) anschließende Trocknung und Vernetzung der Silan-modifizierten Polyvinylalkohole.

9. Verfahren zur Herstellung von Flachmembranen nach Anspruch 8, **dadurch gekennzeichnet, dass** die Substrate ein oder mehrere Stoffe enthalten ausgewählt aus der Gruppe umfassend Metalle, Metalloxide, Polymere oder Glas.

10. Verfahren zur Herstellung der Hohlfasermembranen nach Anspruch 5 bis 7 durch
α) Verspinnen von Lösungen der Silan-modifizierten Polyvinylalkohole aus Anspruch 1 bis 3,
β) gegebenenfalls Ausführung eines Phaseninversionsprozesses, und
γ) anschließende Trocknung und Vernetzung.

11. Verfahren zur Herstellung von Membranen nach Anspruch 8 bis 10, **dadurch gekennzeichnet, dass**
die Lösungen der Silan-modifizierten Polyvinylalkohole in Schritt α) ein oder mehrere organische Lösungsmittel und/oder ein oder mehrere anorganische Lösungsmittel enthalten.

12. Verfahren zur Herstellung von Membranen nach Anspruch 8 bis 11, **dadurch gekennzeichnet, dass** beim Phaseninversionsprozess β) die Produkte aus Schritt α) in ein Fällmedium gegeben werden.

13. Verfahren zur Herstellung von Membranen nach Anspruch 12, **dadurch gekennzeichnet, dass** das Fällmedium ein oder mehrere Lösungsmittel umfasst ausgewählt aus der Gruppe umfassend Alkohole, Ketone oder Stickstoff-haltige Lösungsmittel.

14. Verfahren zur Herstellung von Membranen nach Anspruch 8 bis 13, **dadurch gekennzeichnet, dass** in Schritt γ) die Trocknung und Vernetzung bei Temperaturen zwischen 20 und 200°C und vorzugsweise für eine Minute bis mehrere Stunden durchgeführt wird.

15. Verwendung der Membranen aus Anspruch 4 oder 5 zur Trennung von Gemischen.

## Claims

1. Use of silane-modified polyvinyl alcohols for producing membranes, **characterized in that** the silane-modified polyvinyl alcohols are obtainable by
a) free-radically initiated copolymerization of one or more vinyl esters of branched or unbranched carboxylic acids having 1 to 15 carbon atoms and one or more ethylenically unsaturated silane compounds selected from the group comprising compounds of the general formulae
CR₂=CR-B-Si(OR')₃₋ₙ(R'')ₙ (1)
or
CR₂=CRC(=O)-D-B-Si(OR')₃₋ₙ(R'')ₙ (2),
where
B represents an aryl, heteroaryl or (CR₂)ₘ moiety in which optionally one or more nonadjacent CR₂ groups may be replaced by heteroatoms,
D represents a heteroatom,
R represents a hydrogen atom, an alkyl or aryl moiety or a heteroatom which optionally is substituted with a hydrogen atom or with an alkyl or aryl moiety,
OR' represents an alkoxy, alkylcarboxy or arylcarboxy moiety,
R'' represents an alkyl or aryl moiety, and
n is 0, 1 or 2 and
m is from 0 to 15, and
b) subsequent saponification of the silane-modified vinyl ester copolymers obtained in step a).

2. Use of silane-modified polyvinyl alcohols according to Claim 1, **characterized in that** the ethylenically unsaturated silane compounds are selected from the group comprising vinyltrimethoxysilane, vinyldimethoxymethylsilane, vinyldimethylmethoxysilane, vinyltriethoxysilane, vinyldiethoxymethylsilane, vinyldimethylethoxysilane, vinyltriisopropoxysilane, vinyldiisopropoxymethylsilane, vinyldimethylisopropoxysilane, vinyltributoxysilane, vinyldibutoxymethylsilane, vinyldimethylbutoxysilane, vinyltriacetoxysilane, gamma-acryloyl- or gamma-methacryloyloxyisopropyltrialkoxysilane, gamma-methacryloyloxymethyldi-(alkoxy)methylsilane, gamma-methacryloyloxydimethyl(alkoxy)silane, alpha-methacryloyloxymethyltri(alkoxy)silane, alpha-methacryloyloxymethyldi(alkoxy)methylsilane and alpha-methacryloyloxydimethyl(alkoxy)silane.

3. Use of silane-modified polyvinyl alcohols according to Claim 1 or 2, **characterized in that** step a) utilizes from 0.1 to 30 mol% of ethylenically unsaturated silane compounds, based on the total amount of monomers in step a).

4. Flat sheet membranes obtainable by applying one or more solutions of silane-modified polyvinyl alcohols from Claim 1 to 3 to a substrate and also drying and crosslinking the applied silane-modified polyvinyl alcohols.

5. Hollow fiber membranes obtainable by spinning solutions of silane-modified polyvinyl alcohols from Claim 1 to 3 and also drying and crosslinking the silane-modified polyvinyl alcohols.

6. Membranes according to Claim 4 to 5, **characterized in that** 10 to 90% of the silicon atoms of the originally used silane-modified polyvinyl alcohols are in a crosslinked state, based on the total number of silicon atoms of the silane-modified polyvinyl alcohols used.

7. Membranes according to Claim 4 or 6, **characterized in that** the membrane layer containing crosslinked silane-modified polyvinyl alcohols consists of the crosslinked silane-modified polyvinyl alcohols to an extent of at least 50% by weight, based on the total mass of the aforementioned layer.

8. Process for producing flat sheet membranes according to Claim 4, 6 or 7 by
α) applying one or more solutions of silane-modified polyvinyl alcohols from Claim 1 to 3 to a substrate,
β) optionally performing a phase inversion process, and
γ) then drying and crosslinking the silane-modified polyvinyl alcohols.

9. Process for producing flat sheet membranes according to Claim 8, **characterized in that** the substrates contain one or more substances selected from the group comprising metals, metal oxides, polymers or glass.

10. Process for producing the hollow fiber membranes according to Claim 5 to 7 by
α) spinning solutions of silane-modified polyvinyl alcohols from Claim 1 to 3,
β) optionally performing a phase inversion process, and
γ) then drying and crosslinking.

11. Process for producing membranes according to Claim 8 to 10, **characterized in that** the solutions of silane-modified polyvinyl alcohols in step α) contain one or more organic solvents and/or one or more inorganic solvents.

12. Process for producing membranes according to Claim 8 to 11, **characterized in that** the products of step α) are introduced into a coagulation medium in the course of the phase inversion process β).

13. Process for producing membranes according to Claim 12, **characterized in that** the coagulation medium comprises one or more solvents selected from the group comprising alcohols, ketones or nitrogen-containing solvents.

14. Process for producing membranes according to Claim 8 to 13, **characterized in that** the drying and crosslinking in step γ) is carried out at temperatures between 20 and 200°C and preferably for one minute to several hours.

15. Use of membranes from Claim 4 or 5 for separating mixtures.

## Revendications

1. Utilisation d'alcools polyvinyliques modifiés par des silanes pour la fabrication de membranes, **caractérisée en ce que** les alcools polyvinyliques modifiés par des silanes peuvent être obtenus par
a) copolymérisation initiée radicalairement d'un ou de plusieurs esters de vinyle d'acides carboxyliques non ramifiés ou ramifiés de 1 à 15 atomes C et d'un ou de plusieurs composés de silane éthyléniquement insaturés choisis dans le groupe comprenant les composés des formules générales
CR₂=CR-B-Si (OR')₃₋ₙ(R'')ₙ (1)
ou
CR₂=CRC (=O) -D-B-Si (OR')₃₋ₙ(R'')ₙ (2),
B représentant un radical aryle, hétéroaryle ou (CR₂)ₘ dans lequel un ou plusieurs groupes CR₂ non voisins peuvent être éventuellement remplacés par des hétéroatomes,
D représentant un hétéroatome,
R représentant un atome d'hydrogène, un radical alkyle ou aryle ou un hétéroatome, qui est éventuellement substitué avec un atome d'hydrogène ou un radical alkyle, aryle,
OR' représentant un radical alcoxy, alkylcarboxy ou arylcarboxy,
R" représentant un radical alkyle ou aryle, et
n signifiant 0, 1 ou 2, et
m signifiant 0 à 15, et
b) saponification ultérieure des copolymères d'ester de vinyle modifiés par des silanes obtenus à l'étape a).

2. Utilisation d'alcools polyvinyliques modifiés par des silanes selon la revendication 1, **caractérisée en ce que** les composés de silane éthyléniquement insaturés sont choisis dans le groupe comprenant le vinyltriméthoxysilane, le vinyldiméthoxyméthylsilane, le vinyldiméthylméthoxysilane, le vinyltriéthoxysilane, le vinyldiéthoxyméthylsilane, le vinyldiméthyléthoxysilane, le vinyltriisopropoxysilane, le vinyldiisopropoxyméthylsilane, le vinyldiméthylisopropoxysilane, le vinyltributoxysilane, le vinyldibutoxyméthylsilane, le vinyldiméthylbutoxysilane, le vinyltriacétoxysilane, le gamma-acryl- ou gamma-méthacryloxyisopropyltrialcoxysilane, le gamma-méthacryloxyméthyldi(alcoxy)méthylsilane, le gamma-méthacryloxydiméthyl(alcoxy)silane, l'alpha-méthacryloxyméthyltri(alcoxy)silane, l'alpha-méthacryloxyméthyldi(alcoxy)méthylsilane et l'alpha-méthacryloxydiméthyl(alcoxy)silane.

3. Utilisation d'alcools polyvinyliques modifiés par des silanes selon la revendication 1 ou 2, **caractérisée en ce qu'**à l'étape a), 0,1 à 30 % en moles de composés de silane éthyléniquement insaturés sont utilisés, par rapport à la quantité totale de monomères à l'étape a).

4. Membranes plates pouvant être obtenues par application d'une ou de plusieurs solutions des alcools polyvinyliques modifiés par des silanes selon les revendications 1 à 3 sur un substrat, et séchage et réticulation des alcools polyvinyliques modifiés par des silanes appliqués.

5. Membranes fibres creuses pouvant être obtenues par filage de solutions des alcools polyvinyliques modifiés par des silanes selon les revendications 1 à 3, et séchage et réticulation des alcools polyvinyliques modifiés par des silanes.

6. Membranes selon les revendications 4 à 5, **caractérisées en ce que** 10 à 90 % des atomes de silicium des alcools polyvinyliques modifiés par des silanes utilisés initialement sont réticulés, par rapport au nombre total d'atomes de silicium des alcools polyvinyliques modifiés par des silanes utilisés.

7. Membranes selon la revendication 4 ou 6, **caractérisées en ce que** la couche des membranes contenant des alcools polyvinyliques modifiés par des silanes réticulés est constituée à au moins 50 % en poids des alcools polyvinyliques modifiés par des silanes réticulés, par rapport à la masse totale de la couche susmentionnée.

8. Procédé de fabrication de membranes plates selon la revendication 4, 6 ou 7, par
α) application d'une ou de plusieurs solutions des alcools polyvinyliques modifiés par des silanes selon les revendications 1 à 3 sur un substrat,
β) éventuellement réalisation d'un procédé d'inversion de phase, et
γ) séchage et réticulation ultérieurs des alcools polyvinyliques modifiés par des silanes.

9. Procédé de fabrication de membranes plates selon la revendication 8, **caractérisé en ce que** les substrats contiennent une ou plusieurs substances choisies dans le groupe comprenant les métaux, les oxydes de métaux, les polymères ou le verre.

10. Procédé de fabrication des membranes fibres creuses selon les revendications 5 à 7, par
α) filage de solutions des alcools polyvinyliques modifiés par des silanes selon les revendications 1 à 3,
β) éventuellement réalisation d'un procédé d'inversion de phase, et
γ) séchage et réticulation ultérieurs.

11. Procédé de fabrication de membranes selon les revendications 8 à 10, **caractérisé en ce que** les solutions des alcools polyvinyliques modifiés par des silanes à l'étape α) contiennent un ou plusieurs solvants organiques et/ou un ou plusieurs solvants inorganiques.

12. Procédé de fabrication de membranes selon les revendications 8 à 11, **caractérisé en ce que**, lors du procédé d'inversion de phase β), les produits de l'étape α) sont introduits dans un milieu de précipitation.

13. Procédé de fabrication de membranes selon la revendication 12, **caractérisé en ce que** le milieu de précipitation comprend un ou plusieurs solvants choisis dans le groupe comprenant les alcools, les cétones ou les solvants contenant de l'azote.

14. Procédé de fabrication de membranes selon les revendications 8 à 13, **caractérisé en ce qu'**à l'étape γ), le séchage et la réticulation sont réalisés à des températures comprises entre 20 et 200 °C et de préférence pendant une minute à plusieurs heures.

15. Utilisation des membranes selon la revendication 4 ou 5 pour la séparation de mélanges.
